## Europäisches Patentamt

## European Patent Office

## Office européen des brevets

(19)

(11) Veröffentlichungsnummer: **0 182 793**
**B1**

(12) **EUROPÄISCHE PATENTSCHRIFT**

(45) Veröffentlichungstag der Patentschrift:
**13.09.89**

(21) Anmeldenummer: **85900975.5**

(22) Anmeldetag: **09.02.85**

(86) Internationale Anmeldenummer:
**PCT/DE 85/00035**

(87) Internationale Veröffentlichungsnummer:
**WO 85/04862 (07.11.85 Gazette 85/24)**

(51) Int. Cl.⁴: **C 04 B 38/10**, C 04 B 14/12,
C 04 B 41/85, A 01 K 1/015

(54) **HOCHPORÖSER KERAMIKKÖRPER FÜR AD- BZW. ABSORPTIONSZWECKE, INSBESONDERE FÜR TIERSTREU, VERFAHREN ZU SEINER HERSTELLUNG SOWIE SEINE VERWENDUNG.**

(30) Priorität: **19.04.84 DE 3414965**

(43) Veröffentlichungstag der Anmeldung:
**04.06.86 Patentblatt 86/23**

(45) Bekanntmachung des Hinweises auf die Patenterteilung:
**13.09.89 Patentblatt 89/37**

(84) Benannte Vertragsstaaten:
**AT BE CH DE FR GB LI LU NL SE**

(56) Entgegenhaltungen:
**EP-A-0 066 116**
**FR-A-2 190 753**
**GB-A-697 712**
**US-A-1 963 030**
**US-A-4 123 284**
**US-A-4 424 280**

**American Ceramic Society Bulletin, vol. 47, no. 3, March 1968, Columbus, Ohio, (US), M.F. Modde et al.: "Foamed clay-water systems for light-weight aggregate production", pp. 264,265**

**Die Akte enthält technische Angaben, die nach dem Eingang der Anmeldung eingereicht wurden und die nicht in dieser Patentschrift enthalten sind.**

(73) Patentinhaber: **Effem GmbH, Eitzer Landstrasse, D-2810 Verden/Aller (DE)**

(72) Erfinder: **LANG, Rüdiger, Rodenbeckerstrasse 33, D-4950 Minden (DE)**
Erfinder: **MEYER, Bernd, Distelkampsweg 60a, D-2800 Bremen 33 (DE)**

(74) Vertreter: **Goddar, Heinz J., Dr., FORRESTER & BOEHMERT Widenmayerstrasse 4/I, D-8000 München 22 (DE)**

## Beschreibung

Die Erfindung betrifft ein Verfahren zum Herstellen von porösen Keramikkörpern für Ad- bzw. Absorptionszwecke nach dem einleitenden Teil des Patentanspruches 1 sowie deren Verwendung.

Es besteht ein ständiges Bedürfnis an hochporösen, verrottungsfreien Materialien zur Ad- bzw. Absorption von Flüssigkeiten und Gasen, insbesondere aber auch zur Verwendung als Tierstreu.

Bisher wurde vorteilhafterweise zu diesem Zwecke u. a. Calciumsilikatgranulat eingesetzt, wie es beispielsweise aus der EP-B-0 013 935 und der EP-B-0 014 343 sowie der DE-B-3 121 403 und DE-B-2 902 079 bekannt ist.

Das bekannte Calciumsilikatgranulat weist vorteilhafterweise eine Mikroporenstruktur auf, welche aufgrund ihres Kapillareffektes dazu befähigt ist, oleophil und hydrophil Flüssigkeiten zu absorbieren, aber auch gasförmige Substanzen aufzunehmen.

Das bekannte Calciumsilikatgranulat mit Mikroporenstruktur wird aus feingemahlenem siliciumdioxidhaltigem Material, wie Quarzmehl, unter Zugabe einer anionenaktiven grenzflächenaktiven Substanz (Tensid) mit calciumoxidhaltigem Material, wie Kalk und Wasser, innig durchmischt, anschließend aufgeschäumt, woraufhin eine Autoklavenhärtung und eine anschließende Zerkleinerung mit anschließender Klassierung sowie eine abschließende Trocknung und gegebenenfalls Kühlung vorgesehen sind.

Das derart nach dem bekannten Verfahren hergestellte Absorptionsmittel hat sich in der Praxis vorzüglich bewährt, jedoch besteht ein Bedürfnis nach einem Material für Ad- bzw. Absorptionszwecke, insbesondere zur Verwendung als Tierstreu, welches unter Beibehaltung der günstigen Eigenschaften des bekannten, eingangs diskutierten Materials kostengünstiger und mit größeren Variationsmöglichkeiten hinsichtlich der Produktparameter, insbesondere auch hinsichtlich des Aussehens, in kontinuierlichem Verfahren hergestellt werden kann.

Aus der US-A-4 424 280 ist ein Verfahren der eingangs genannten Art bekannt, bei dem ein Schlicker, bestehend aus Ton, Schäumungsmittel und weiteren Zuschlagstoffen, aufgeschäumt, getrocknet und gebrannt wird, wobei die Viskosität durch den Zusatz von Methylzellulose gesteuert wird. Das geschäumte Tonmaterial findet als Absorptionsmittel Verwendung. Es hat sich gezeigt, daß dieses Material insbesondere bei Verwendung als Tierstreu keine in vollem Umfang befriedigenden Produkteigenschaften aufweist, wobei dies insbesondere die Wasseraufnahmefähigkeit und die Geruchsbindung betrifft.

Aus der FR-A-2 190 753 ist ein Verfahren zur Herstellung von geschäumten Massen auf Tonbasis, die neben Bindemittel Wasser und Detergentien enthalten, bekannt, wobei dort nach erfolgter Schäumung die Massen getrocknet, zerkleinert und bei einer Temperatur von mehr als 900° C gebrannt werden. Das Aufschäumen der wässrigen Mischung von Tonmaterialien, Bindemittel und Tensiden erfolgt dabei durch Einleitung von Druckluft, wobei aber kein geschlossenes System vorliegt, d. h. also, das Mischen drucklos erfolgt. Es hat sich gezeigt, daß bei einer derartigen Vorgehensweise keine befriedigenden Produkteigenschaften bezüglich Porosität und niedriger Dichte erreicht werden können.

Der Erfindung liegt die Aufgabe zugrunde, das Verfahren der eingangs genannten Art dahingehend weiterzubilden, daß es kostengünstiger und mit größeren Variationsmöglichkeiten hinsichtlich der Produktparameter durchgeführt werden kann und zu einem Produkt führt, welches für Ad- bzw. Absorptionszwecke, insbesondere als Tierstreu, besser geeignet ist als das nach den bekannten Verfahren hergestellte Material.

Erfindungsgemäß wird diese Aufgabe durch die im kennzeichnenden Teil des Patentanspruches 1 aufgeführten Merkmale gelöst. Die darauf zurückbezogenen Unteransprüche kennzeichnen besonders vorteilhafte Ausführungsformen des Verfahrens nach der Erfindung. Schließlich lehrt die Erfindung auch die Verwendung des nach dem erfindungsgemäßen Verfahren hergestellten, an sich als Ad- bzw. Absorptionsmittel konzipierten Materials in massiver und/oder Granulatform als wärme- und/oder schallisolierender Werkstoff für Bauzwecke und/oder als Zuschlagstoff für Hochtemperatur-Baustoffe, wie Ofenbaustoffe oder feuerfeste Baustoffe.

Der Erfindung liegt die überraschende Erkenntnis zugrunde, daß es durch die nach der Erfindung gewählte Vorgehensweise, nämlich die Ausgangsmischung unter Druck mittels ein- und hindurchgeleiteter Druckluft zu schäumen, also im geschlossenen System, gelingt, gegenüber dem Stand der Technik deutlich verbesserte Produkteigenschaften hinsichtlich niedriger Dichte, hoher Porosität und hoher Wasseraufnahmefähigkeit, bei gleichzeitig guter mechanischer Stabilität, zu erzielen.

Durch das erfindungsgemäße Verfahren ist es möglich, hochporöse keramische Produkte mit Porositäten, die, bezogen auf die Gesamtmasse, größer als 100 %, bevorzugt 200 bis 250 %, sind, sehr wirtschaftlich herzustellen, wobei Porengröße und -art weitgehend gesteuert werden können. Dabei beträgt vorteilhafterweise die Zeit von der Tonaufbereitung bis zum gebrannten Produkt bei Porositäten von über 100 % bis zu zwei Stunden und weniger, wobei die kurze Verfahrenszeit im wesentlichen durch die kurze Trocknung und Brenndauer bedingt ist.

Üblicherweise verläuft das erfindungsgemäße Verfahren derart, daß Ton mit Wasser und Verflüssigungsmittel sowie Tensiden und ggf. Zuschlagstoffen zu einer wasserarmen, thixotropen Suspension angerührt wird, wobei die Aufschäumung in einer Dispergieranlage unter Zugabe von Preßluft erfolgt. Dabei können herkömmliche Dispergieranlagen, wie sie beispielsweise unter dem Handelsnamen "Hansa-Mixer" durch die Firma Hansawerke Lürman, Schütte & Co., Bremen, vertrieben werden, eingesetzt werden, welche unter Druck (1 bis 10 bar) definierte Mengen Druckluft zusetzen. Die Dispergieranlage weist dabei eine weitere Feindosierungspumpe auf, mittels welcher Flüssigkeit vor und ggf. während des Schäumvorganges zugegeben werden kann. Vorteilhafterweise wird bei der Durchführung des erfindungsgemäßen Verfahrens eine der Verflüssigungswirkung des Verflüssigungsmittels entgegenwirkende Substanz eingesetzt, beispielsweise verdünnte Salzsäure, wodurch es möglich wird, hochviskose, thixotrope, eigenstabile Schaum-Suspensionen herzustellen.

Die eigenstabile, thixotrope Schaum-Suspension wird sodann getrocknet, wobei der Wasserdampf ungehindert durch die Poren aufgrund der hohen Eigenporosität des Materials austreten kann. Dabei ist es insbesondere förderlich, wenn die Ausgangsmaterialmischung einen relativ geringen Wassergehalt aufweist. Üblicherweise wird das getrocknete Material in Strängen von etwa 1 cm Durchmesser vorgelegt, wobei bei Temperaturen von 200°C beispielsweise mit Trockenzeiten von nicht mehr als 5 Minuten gearbeitet werden kann. Dieses getrocknete Material wird vor dem Brennen zu Granulat zerkleinert.

Bedingt durch die Porosität des Materials ist beim Brennen ebenfalls ein sehr günstiges Arbeiten, ähnlich wie beim Trocknen, möglich. Bei 1000°C Ofentemperatur, einer Materialtemperatur zwischen etwa 600 bis 300°C entsprechend, können innerhalb von weniger als 5 Minuten Brennzeit, eingeschlossen Auf- und Abheizzeiten, für Ab- und Adsorptionszwecke, insbesondere zur Verwendung als Tierstreu, geeignete poröse Granulate hergestellt werden. Dabei verfestigen sich die Tone bei dieser Temperaturbehandlung soweit, daß sie wasserunlöslich werden.

Eine Behandlung bei höherer Temperatur ist für die erfindungsgemäße Verwendung des Materials als Absorptionsmittel bzw. als Tierstreu nicht erwünscht, da dabei eine Versprödung des Materials und eine Verringerung der inneren Oberfläche erfolgt, wobei die Versprödung aufgrund der entstehenden harten Bruch-Oberflächen und die Verringerung der inneren Oberfläche in unerwünschter Weise zu einer schlechteren Flüssigkeitsaufnahme führt. Das erfindungsgemäß hergestellte, bei niederen Temperaturen gebrannte Material besitzt aufgrund der hohen inneren Oberfläche eine starke Geruchsbindungswirkung sowie eine gute Wasseraufnahmebefähigung.

Es ist von besonderem Vorteil, wenn, bei Verwendung als Tierstreu, das nach dem erfindungsgemäßen Verfahren hergestellte Material einen pH-Wert von 5 bis 8 aufweist, wobei der pH-Wert beispielsweise durch eine Säure- oder Säuresalzbehandlung so stabilisiert werden kann, daß der pH-Wert zuverlässig im vorgenannten Bereich gehalten wird, weil gerade ein derartiger pH-Wert besonders günstig die Geruchsbindung von basischen Bestandteilen bewirkt. Das gesamte Verfahren nach der Erfindung wird vorzugsweise kontinuierlich betrieben. Soll das nach dem erfindungsgemäßen Verfahren hergestellte Material für z. B. Feuerfestzwecke verwendet werden, so wird natürlich die Menge der Zuschlagstoffe, die überhaupt bei beliebigen Anwendungszwecken, in zweckentsprechender Weise eingestellt, also Zusatz von Magnesit, Quarzsand und dergleichen, wie es die jeweiligen Anwendungszwecke erfordern.

Ein ähnliches Verfahren wie dasjenige nach der Erfindung gerichtet auf die Herstellung eines porösen Leichtkeramikmaterials für Bauzwecke, ist Gegenstand der EP-B-0 179 775 gleichen Zeitrangs.

Nachstehend ist die Erfindung anhand eines Ausführungsbeispiels unter Bezugnahme auf die schematische Zeichnung im einzelnen erläutert.

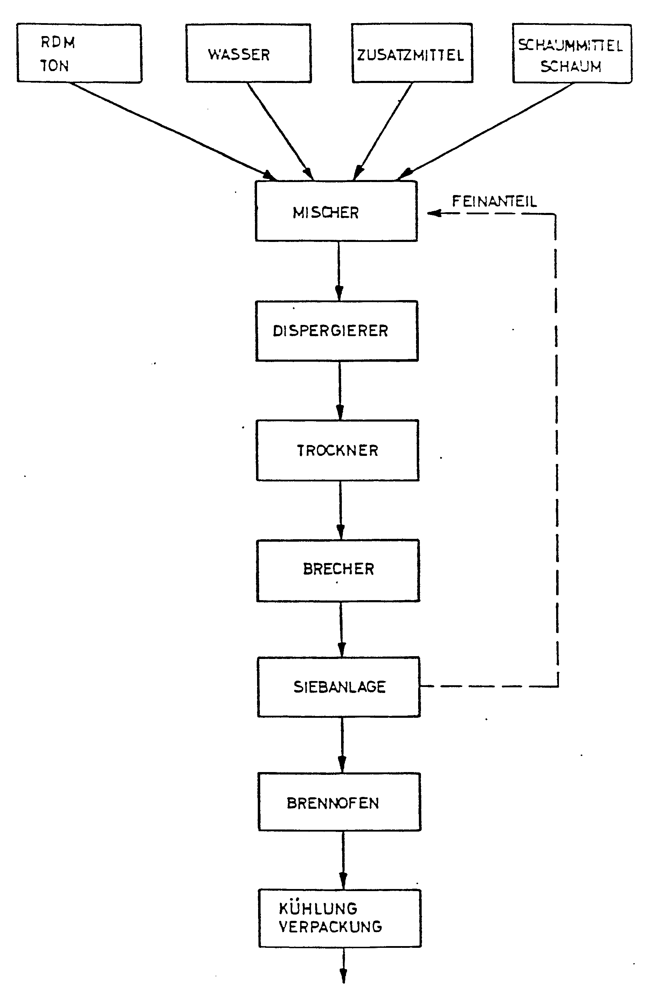

Die aus einer einzigen Figur bestehende Zeichnung zeigt dabei ein Flußdiagramm der erfindungsgemäßen Verfahrensführung.

**Patentansprüche**

1. Verfahren zum Herstellen von porösen Keramikkörpern mit einer Porosität von 50 bis 300 %, bezogen auf das Volumen des Feststoffes, einem Wasseraufnahmevermögen von 50 bis 200 %, einem pH-Wert im Bereich von 5 bis 9, einer Rohdichte von 400 bis 700 g/l und einer inneren Oberfläche (BET ($N_2$)) zwischen 20 $m^2$/g und 200 $m^2$/g zur Verwendung als Ad- bzw. Absorptionsmittel, insbesondere als Tierstreu, wobei eine geschäumte Mischung aus Ton, Zuschlagstoff(en), Tensid(en) und Wasser geformt, getrocknet und gebrannt wird, dadurch gekennzeichnet, daß 45 bis 80 Gew.-Teile Ton, 0 bis 50 Gew.-Teile Kalkspat, Quarzsand, Dolomit, Feldspat, Schamotte, Sepiolith und/oder organische Materialien, wie Sägemehl oder Kohle, als Zuschlagstoff(e), 15 bis 30 Gew.-Teile Wasser, 0,001 bis 0,01 Gew.-Teile Tensid(e) sowie 0,01 bis 0,03 Gew.-Teile Verflüssigungsmittel gemischt und in einer Dispergieranlage unter Druck (1 bis 10 bar) durch Druckluftzufuhr aufgeschäumt werden, daß die aus der geschäumten Mischung geformten Tonformkörper bei einer Temperatur zwischen Raumtemperatur und 200°C getrocknet werden, und daß die getrockneten Tonformkörper zerkleinert und unter Rückführen des Feinanteils zur Ausgangsmischung gesiebt und bei einer Produkttemperatur im Tonformkörper zwischen 600 und 1000°C gebrannt werden.

2. Verfahren nach Anspruch 1 dadurch gekennzeichnet, daß für die Herstellung der Ausgangsmischung 60 bis 75 Gew.-Teile Ton, 15 bis 20 Gew.-Teile Wasser sowie 10 bis 20 Gew.-Teile Zuschlagstoff(e) verwendet werden.

3. Verfahren nach Anspruch 1 oder 2, dadurch gekennzeichnet, daß das Aufschäumen der Ausgangsmischung bei einer Temperatur zwischen Raumtemperatur und 95°C erfolgt.

4. Verfahren nach einem der vorangehenden Ansprüche, dadurch gekennzeichnet, daß vor oder während des Aufschäumens der Ausgangsmischung dem Verflüssigungsmittel entgegenwirkende Mittel eingesetzt werden, um eine hochviskose, thixotrope, eigenstabile Schaumsuspension herzustellen.

5. Verfahren nach einem der vorangehenden Ansprüche, dadurch gekennzeichnet, daß die zerkleinerten Tonformkörper in weniger als 5 Min bei einer Ofentemperatur von 1000°C, entsprechend einer Produkttemperatur zwischen 600 und 800°C, gebrannt werden.

6. Verfahren nach einem der vorangehenden Ansprüche, dadurch gekennzeichnet, daß zur Verwendung als Tierstreu der pH-Wert der zerkleinerten, gebrannten Tonformkörper in wässriger Aufschlämmung mit einer Säure bzw. einem Säuresalz auf 5 bis 8 abgesenkt bzw. stabilisiert wird.

7. Verwendung der nach einem der Ansprüche 1 bis 5 hergestellten Keramikkörper in massiver und/oder Granulatform als wärme- und/oder schallisolierender Werkstoff für Bauzwecke.

8. Verwendung der nach einem der Ansprüche 1 bis 5 hergestellten Keramikkörper in massiver und/oder Granulatform als Zuschlagstoff für Hochtemperatur-Baustoffe wie Ofenbaustoffe oder feuerfeste Baustoffe.

## Claims

1. Process for producing porous ceramic bodies having a porosity of 50 to 300 %, relative to the volume of the solid, a water absorption capacity of 50 to 200 %, a pH value in the range from 5 to 9, a bulk density of 400 to 700 g/l and an internal surface area (BET ($N_2$)) between 20 $m^2$/g and 200 $m^2$/g for use as an adsorbent or absorbent, in particular as an animal litter, a foamed mixture of clay, additive(s), surfactant(s) and water being formed, dried and burned, characterized in that 45 to 80 parts by weight of clay, 0 to 50 parts by weight of calcite, quartz sand, dolomite, felspar, fireclay, sepiolite and/or organic materials, such as sawdust or coal, as additive(s), 15 to 30 parts by weight of water, 0.001 to 0.01 parts by weight of surfactant(s) and 0.01 to 0.03 parts by weight of plasticising agent are mixed and foamed up in a dispersing unit under pressure (1 to 10 bar) by feeding compressed air, that the clay mouldings formed from the foamed mixture are dried at a temperature between room temperature and 200°C, and that the dried clay mouldings are comminuted and screened with recycle of the fines to the starting mixture, and burned at a product temperature in the clay moulding between 600 and 1000°C.

2. Process according to Claim 1, characterized in that 60 to 75 parts by weight of clay, 15 to 20 parts by weight of water and 10 to 20 parts by weight of additive(s) are used for preparing the starting mixture.

3. Process according to Claim 1 or 2, characterized in that the foaming of the starting mixture is carried out at a temperature between room temperature and 95°C.

4. Process according to one of the preceding Claims, characterized in that, before or during the foaming of the starting mixture, agents counteracting the plasticising agent are employed, in order to prepare a highly viscous, thixotropic, self-supporting foam suspension.

5. Process according to one of the preceding Claims, characterized in that the comminuted clay mouldings are burned within less than 5 minutes at an oven temperature of 1000°C, corresponding to a product temperature between 600 and 800°C.

6. Process according to one of the preceding Claims, characterized in that, for use as animal litter, the pH value of the comminuted, burned clay mouldings in aqueous suspension is lowered to or stabilised at 5 to 8 by means of an acid or acid salt.

7. Use of the ceramic bodies, prepared according to one of Claims 1 to 5, in solid form and/or granular form as a heat- and/or sound-insulating material for building purposes.

8. Use of the ceramic bodies, prepared according to one of Claims 1 to 5, in solid form and/or granular form as additives for high-temperature building materials such as oven building materials or refractory building materials.

## Revendications

1. Procédé de préparation de corps céramiques poreux, avec une porosité de 50 à 300 %, par rapport au volume du solide, un pouvoir d'absorption d'eau de 50 à 200 %, un pH compris entre 5 et 9, une densité brute de 400 à 700 g/l et une surface interne (BET ($N_2$)) comprise entre 20 $m^2$/g et 200 $m^2$/g pour l'utilisation comme agent adsorbant ou absorbant, notamment comme litière d'animaux, en préparant un mélange expansé d'argile, d'additif(s), de tensioactif(s) et d'eau, qu'on sèche et calcine, caractérisé en ce que 45 à 80 pourcents en poids d'argile, 0 à 50 pourcents en poids de calcite sable de quartz, dolomite, feldspath, chamotte, sépiolithe et/ou de matériaux organiques, comme sciure de bois ou charbon actif comme additif(s), 15 à 30 pourcents d'eau, 0,001 à 0,01 pourcent en poids ainsi que 0,01 à 0,03 pourcent en poids de fluidifiants sont mélangés et expansés dans une unité de dispersion sous pression (1 à 10 bars) par injection d'air comprimé, que les corps en argile à partir du mélange expansé à une température comprise entre la température ambiante et 200°C sont séchés et que les corps moulés en argile séchés sont broyés et tamisés, le produit fin étant recyclé dans le mélange de départ et ils sont calcinés à une température de produit comprise entre 600 et 1000°C pour donner des corps moulés en argile.

2. Procédé selon la revendication 1, caractérisé en ce que pour la préparation du mélange de départ, on utilise 60 à 75 parties en poids d'argile, 15 à 20 parties en poids d'eau ainsi que 10 à 20 parties en poids d'additif(s).

3. Procédé selon la revendication 1 ou 2, caractérisé en ce que le moussage du mélange de départ a lieu à une température comprise entre la température ambiante et 95°C.

4. Procédé selon l'une des revendications précédentes, caractérisé en ce qu'avant ou pendant le moussage du mélange de départ, on ajoute l'agent antagoniste du fluidifiant, pour préparer une suspension de mousse stable, thixotrope et très visqueuse.

5. Procédé selon l'une des revendications précédentes, caractérisé en ce que les corps moulés en argile broyés sont calcinés en moins de 5 minutes à une température de four de 1000°C, correspondant à une température de produit comprise entre 600 et 800°C.

6. Procédé selon l'une des revendications précédentes, caractérisé en ce que pour l'utilisation comme litière d'animaux le pH des corps moulés calcinés et broyés est abaissé ou bien stabilisé entre 5 et 8 dans une suspension aqueuse avec un acide ou de l'acide chlorhydrique.

7. Utilisation des corps céramiques préparés selon l'une des revendications 1 à 5 sous forme massive ou de granulés comme matériau isolant du bruit ou de la chaleur pour le bâtiment.

8. Utilisation des corps céramiques préparés selon l'une des revendications 1 à 5 sous forme massive ou de granulés comme additif pour des matériaux résistant à haute température ou comme des matériaux de four ou des matériaux réfractaires.